# EUROPEAN PATENT SPECIFICATION

(11) **EP 3 874 882 B1**
(45) Date of publication and mention of the grant of the patent: **04.12.2024**
(21) Application number: 19804903.3
(22) Date of filing: 22.10.2019
(51) Int. Cl.: H04W 72/0453, H04L 5/00, H04W 74/0808

(54) **METHODS AND WIRELESS TRANSMIT/RECEIVE UNITS FOR BANDWIDTH PART OPERATION**
VERFAHREN UND DRAHTLOSE SENDE-/EMPFANGSEINHEITEN FÜR BANDBREITENTEILBETRIEB
PROCÉDÉS ET UNITÉS D'ÉMISSION/RÉCEPTION SANS FIL POUR UN FONCTIONNEMENT AVEC PARTIE DE LARGEUR DE BANDE

(30) Priority: 30.10.2018 US 201862752742 P; 12.02.2019 US 201962804454 P
(43) Date of publication of application: 08.09.2021
(73) Proprietor: InterDigital Patent Holdings, Inc., Wilmington, DE 19809 (US)
(72) Inventor: HAJIR, Mouna, Montreal, Québec H2W2G1 (CA); TOOHER, J. Patrick, Montreal, Québec H3A 3G4 (CA); DEENOO, Yugeswar, Conshohocken, Pennsylvania 19428 (US)
(74) Representative: AWA Sweden AB
(86) International application number: PCT/US2019/057365
(87) International publication number: WO 2020/092054

(56) References cited:
- TCL COMMUNICATION: "Wideband carrier usage for NR-U", vol. RAN WG1, no. Chengdu, China; 20181008 - 20181012, 28 September 2018 (2018-09-28), XP051518485, Retrieved from the Internet <URL:http://www.3gpp.org/ftp/tsg%5Fran/WG1%5FRL1/TSGR1%5F94b/Docs/R1%2D1811084%2Ezip> [retrieved on 20180928]
- MEDIATEK INC: "On frame structure design for NR-U operation", vol. RAN WG1, no. Chengdu, China; 20181008 - 20181012, 29 September 2018 (2018-09-29), XP051517848, Retrieved from the Internet <URL:http://www.3gpp.org/ftp/tsg%5Fran/WG1%5FRL1/TSGR1%5F94b/Docs/R1%2D1810439%2Ezip> [retrieved on 20180929]
- INTERDIGITAL INC: "NR-U Frame Structure Design", vol. RAN WG1, no. Chengdu, China; 20181008 - 20181012, 29 September 2018 (2018-09-29), XP051518602, Retrieved from the Internet <URL:http://www.3gpp.org/ftp/tsg%5Fran/WG1%5FRL1/TSGR1%5F94b/Docs/R1%2D1811201%2Ezip> [retrieved on 20180929]
- INTERDIGITAL INC: "BWP operation in unlicensed spectrum", vol. RAN WG1, no. Busan, Korea; 20180521 - 20180525, 20 May 2018 (2018-05-20), XP051442167, Retrieved from the Internet <URL:http://www.3gpp.org/ftp/Meetings%5F3GPP%5FSYNC/RAN1/Docs/> [retrieved on 20180520]
- MEDIATEK INC: "Correction on handling of BWP inactivity timer", vol. RAN WG2, no. Athens, Greece; 20180226 - 20180302, 16 February 2018 (2018-02-16), XP051400368, Retrieved from the Internet <URL:http://www.3gpp.org/ftp/tsg%5Fran/WG2%5FRL2/TSGR2%5F101/Docs/> [retrieved on 20180216]

## Description

### BACKGROUND

Next generation air interfaces, including further evolution of LTE (Long Term Evolution) Advanced Pro and New Radio (NR), are expected to support a wide range of use cases with varying service requirements, including high data rate mobile broadband services, for diverse wireless transmit/receive unit (WTRU) capabilities, and with different spectrum usage models, e.g., licensed, unlicensed/shared etc., under various mobility scenarios using an architecture that is flexible enough to adapt to diverse deployment scenarios.

In NR, a WTRU may operate using bandwidth parts (BWPs) in a carrier. First, a WTRU may access a cell using an initial BWP. It may then be configured with a set of BWPs to continue operation.

Channel access in an unlicensed frequency band may use a Listen-Before-Talk (LBT) mechanism, which is typically mandated independently of whether the channel is occupied or not. For frame-based systems, LBT may be defined by one or more of the following parameters : a Clear Channel Assessment (CCA) time, a Channel Occupancy Time (COT), an idle period, a fixed frame period, a short control signaling transmission time, and a CAA (Capacity Allocation Acknowledgement) energy detection threshold. For load-based systems (e.g., transmit/receive structure may not be fixed in time), LBT may be parameterized by a number N corresponding to the number of clear idle slots in extended Clear Channel Assessment (CCA) instead of a fixed time period before a device may access the channel. N may be selected randomly within a range.

The listen-before-talk (LBT) procedure is defined as a mechanism by which a WTRU applies a CCA check before using the channel. The CCA utilizes at least energy detection to determine the presence or absence of other signals on a channel in order to determine if a channel is occupied or clear, respectively.

Clear Channel Assessment (CCA) may be performed on contiguous PRBs (Physical Resource Blocks) in multiples of 20 MHz (or number of PRBs). A WTRU may be configured with a set of BWPs that are composed of one or more 20MHz sub-bands. When the network acquires the channel, it may indicate to the WTRU the start of the COT. However, the WTRU further needs to determine which sub-bands (e.g., sets of PRBs) of the frequency carrier were grabbed and further determine what active DL BWPs and/or portions of configured DL BWPs are acquired by the network.

Also, if the regular uplink (RUL) in a cell is assessed as unreliable for an uplink transmission, the WTRU may switch its active UL carrier to a supplementary uplink carrier (SUL).

Thus, methods for bandwidth part (BWP) and supplementary uplink (SUL) operation in wireless systems are needed.

The document 3GPP R1 -1811084: "Wideband carrier usage for NR-U" by TCL Communication, 3GPP TSG RAN WG1 Meeting #94Bis, 8-12 October 2018, discloses that BWP concept allows handling the issue of partial subband availability for wideband NR-U carrier. The gNB can configure multiple BWPs for each UE, where these BWPs are configured so as to avail the wideband carrier in a number of combinations of partial subbands being available. These UEs can initially be configured for the default bandwidth part which is wide and may potentially encompass the whole wideband carrier. When the gNB has its LBT passing on a subset of subbands of the wideband carrier, it can switch the BWPs for the UEs so that it corresponds to the available subbands.

The document 3GPP R1-1810439: "On frame structure design for NR-U operation" by MediaTek Inc., 3GPP TSG RAN WG1 Meeting #94-bis, 8-12 October 2018, proposes that the frequency-domain location of the CORESET should be adjusted according to the results of LBT. Preamble can be used to indicate the location of the CORESET.

### SUMMARY

Methods are described herein for BWP and SUL operation in wireless systems, especially in systems using a shared spectrum. The term shared spectrum may refer to any spectrum that is shared between multiple operators and/or multiple technologies (e.g., 3GPP, WiFi, radar, satellite, etc.), and may include lightly licensed spectrum, licensed spectrum that is shared between operators and/or unlicensed spectrum. The terms shared and unlicensed may be used interchangeably in this disclosure.

In one exemplary embodiment, a wireless transmit/receive unit (WTRU) may receive information related to an upcoming channel occupancy time (COT) and use the received information to determine at least one resource for the operation of the WTRU during the COT. The received information may include signaling information of an occupied channel in a frequency domain during the COT. The received information may also include a duration of the COT. The at least one resource may include a control resource set (CORESET) within which the WTRU shall operate. The WTRU may monitor at least one frequency band in order to detect the information related to an upcoming channel occupancy time. The WTRU may select a downlink bandwidth part (DL BWP) for message reception. The selection may be based on at least one measurement performed by the WTRU. The WTRU may trigger a measurement report when at least one measurement associated with a DL BWP satisfies a criterion. The WTRU may switch from one DL BWP to another DL BWP. It may then transmit a message indicating the switch. The WTRU may also select an uplink bandwidth part (UL BWP) for message transmission. At least one inactivity timer may be configured in the WTRU for at least one DL BWP. The WTRU may deactivate a DL BWP when its corresponding inactivity timer expires.

In another exemplary embodiment, a WTRU operating in a wireless network may transmit data on a first uplink carrier. It may trigger a switch from the first uplink carrier to a second uplink carrier based on at least one condition of the network and transmit data on the second uplink carrier.

The invention is defined by the appended claims.

### BRIEF DESCRIPTION OF THE DRAWINGS

A more detailed understanding may be had from the following description, given by way of example in conjunction with the accompanying drawing, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating a bandwidth part operation in accordance with a first exemplary embodiment;
FIG. 3 is a diagram illustrating a bandwidth part operation in accordance with a second exemplary embodiment;
FIG. 4 is a diagram illustrating an incremental monitoring process implemented by a WTRU in accordance with an exemplary embodiment;
FIG. 5 is a flow-chart diagram illustrating operation of an example WTRU in accordance with an exemplary embodiment; and
FIG. 6 is flow-chart diagram illustrating operation of an example WTRU in accordance with another exemplary embodiment.

### DETAILED DESCRIPTION

### EXAMPLE NETWORKS FOR IMPLEMENTATION OF THE EMBODIMENTS

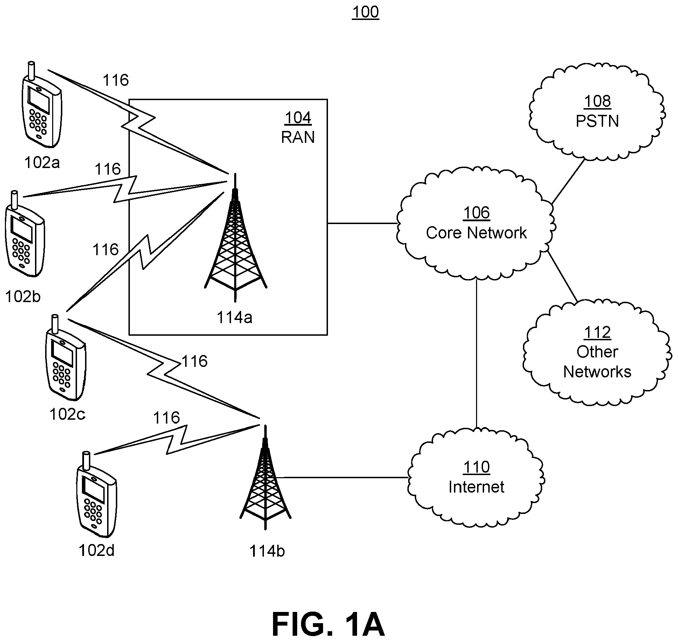

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications system 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

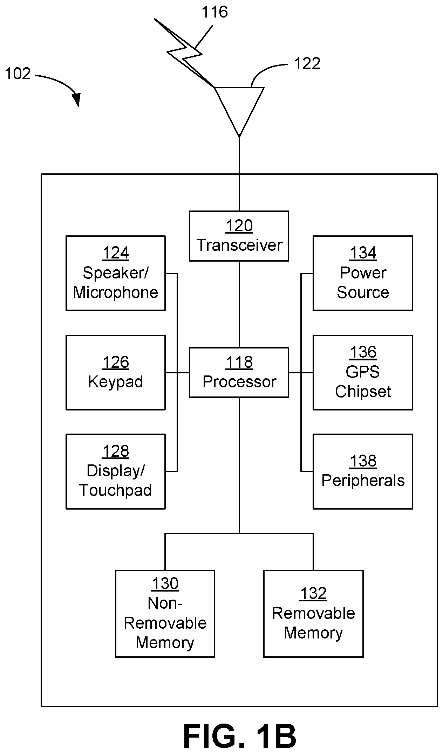

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable locationdetermination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

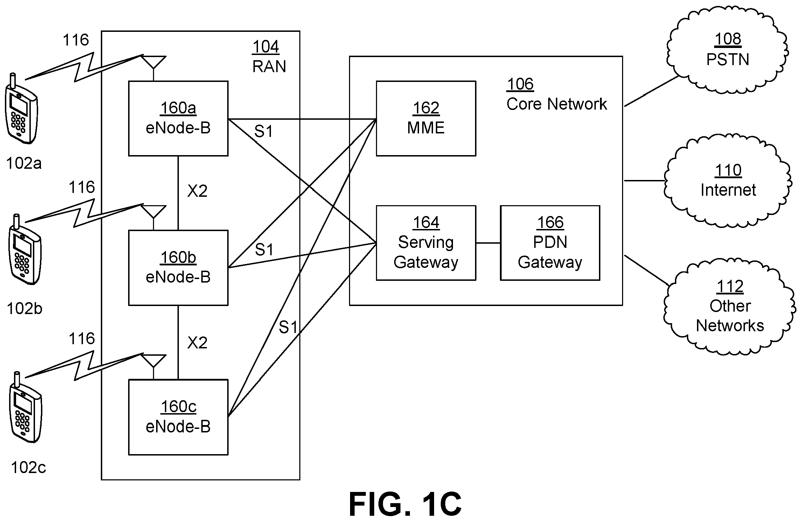

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during intereNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11 ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country.

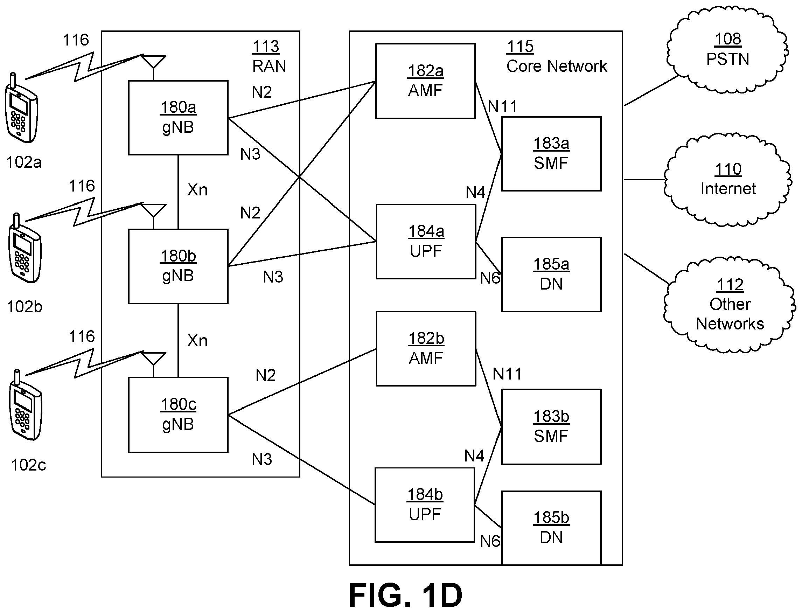

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernetbased, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### BWP AND SUL OPERATION

The term network in the following description may refer to one or more gNBs which in turn may be associated with one or more Transmission/Reception Points (TRPs) or any other node in the radio access network.

The term shared spectrum may refer to any spectrum that is shared between multiple operators and/or multiple technologies (e.g., 3GPP, WiFi, radar, satellite etc.) and may include lightly licensed spectrum, licensed spectrum that is shared between operators and/or unlicensed spectrum. The terms shared spectrum and unlicensed spectrum may be used interchangeably in this disclosure.

Next generation air interfaces, including further evolution of LTE Advanced Pro and a New Radio (NR), are expected to support a wide range of use cases with varying service requirements (e.g., low overhead low data rate power efficient services (mMTC), ultra-reliable low latency communication (URLLC) and high data rate enhanced mobile broadband services (eMBB)), for diverse WTRU capabilities (low power low bandwidth WTRUs, WTRUs capable of very wide bandwidth, e.g., 80Mhz, WTRUs support for high frequencies e.g., >6Ghz etc.), with different spectrum usage models (e.g., licensed, unlicensed/shared etc.), under various mobility scenarios (e.g., stationary/fixed, high speed trains etc.) using an architecture that is flexible enough to adapt to diverse deployment scenarios (e.g., standalone, non-standalone with assistance from a different air interface, centralized, virtualized, distributed over ideal/non-ideal backhaul etc.).

In NR, a WTRU may operate using bandwidth parts (BWPs) in a carrier spectrum. First, a WTRU may access the cell using an initial BWP. It may then be configured with a set of BWPs to continue operation. At any given moment, a WTRU may have at least one active BWP. Each BWP may be configured with a set of Control Resource Sets (CORESETs) within which a WTRU may blind decode Physical Downlink Control Channel (PDCCH) candidates for scheduling, among other things.

Furthermore, NR supports variable transmission duration and feedback timing. With variable transmission duration, a Physical Downlink Shared Channel (PDSCH) or Physical Uplink Shared Channel (PUSCH) transmission may occupy a contiguous subset of symbols of a slot. With variable feedback timing, the Downlink Control Information (DCI) for a DL assignment may include an indication for the timing of the feedback for the WTRU, e.g., by pointing to a specific Physical Uplink Control Channel (PUCCH) resource.

NR may support two types of PUCCH resources, a short PUCCH and a long PUCCH. The former may be transmitted using 1 or 2 OFDM symbols, while the latter may use up to 14 OFDM symbols. Each PUCCH type may have multiple formats which may depend on the type and/or size of corresponding payload.

Beamforming may be used to compensate for increased path-loss at higher frequencies (e.g., >6 GHz). A large number of antenna elements may be used to achieve higher beamforming gain.

Analog and/or hybrid beamforming may be used to reduce implementation costs by reducing the number of RF chains. Typically, analog/hybrid beams may be multiplexed in time. Beamforming may be applied for Sync and/or Physical Broadcast Channel (PBCH) and/or Control channels to provide cell wide coverage.

Different reference signals may be defined for beam management in the DL and UL. For example, the downlink beam management may use Channel State Information-Reference Signal (CSI-RS), Demodulation Reference Signal (DMRS), synchronization signal, or similar. For example, the uplink beam management may use Sounding Reference Signal (SRS), DMRS, Random Access Channel (RACH), or similar.

Operation in an unlicensed frequency band may be subject to some limits on the Transmit Power Control (TPC), the RF output power and power density given by the mean Effective Isotropic Radiated Power (EIRP), and the mean EIRP density at the highest power level. It may further be subject to requirements on the transmitter out of band emissions. Such may be specific to bands and/or geographical locations.

Operation may be further subject to requirements on the Nominal Channel Bandwidth (NCB) and the Occupied Channel Bandwidth (OCB), which may be defined for unlicensed spectrum in the 5 GHz region. The Nominal Channel Bandwidth, i.e., the widest band of frequencies inclusive of guard bands assigned to a single channel, shall be at least 5MHz at all times in NR. The Occupied Channel Bandwidth, i.e., the bandwidth containing 99 % of the power of the signal, shall be between 80 % and 100 % of the declared Nominal Channel Bandwidth. During an established communication, a device may be allowed to operate temporarily in a mode where its Occupied Channel Bandwidth may be reduced to as low as 40 % of its Nominal Channel Bandwidth with a minimum of 4 MHz.

Channel access in an unlicensed frequency band may use a Listen-Before-Talk (LBT) mechanism. LBT is typically mandated independently of whether the channel is occupied or not.

For frame-based systems, LBT may be defined by (1) a Clear Channel Assessment (CCA) time (e.g., ~20 µs), (2) a Channel Occupancy Time (COT) (e.g., minimum 1ms, maximum 10ms), (3) an idle period (e.g., minimum 5% of channel occupancy time), (4) a fixed frame period (e.g., equal to the channel occupancy time + idle period), (5) a short control signaling transmission time (e.g., maximum duty cycle of 5% within an observation period of 50ms), and (6) a Capacity Allocation Acknowledgement (CAA) energy detection threshold.

For load-based systems (e.g., transmit/receive structure may not be fixed in time), LBT may be parameterized by a number N corresponding to the number of clear idle slots in extended CCA that must be detected before a device may access the channel instead of the fixed frame period. N may be selected randomly within a range.

Deployment scenarios may include different standalone NR-based operations, different variants of dual connectivity operation (e.g., EN-DC (E-UTRAN New Radio - Dual Connectivity) with at least one carrier operating according to the LTE radio access technology (RAT) or NR DC with at least two sets of one or more carriers operating according to the NR RAT), and/or different variants of Carrier Aggregation (CA), e.g., possibly also including different combinations of zero or more carriers of each of LTE and NR RATs.

For example, for LTE, the following functionalities were considered for a License Assisted Access (LAA) system:
- Listen-before-talk (Clear Channel Assessment) : The listen-before-talk (LBT) procedure is defined as a mechanism by which an equipment applies a Clear Channel Assessment (CCA) check before using the channel. The CCA may utilize at least energy detection to determine the presence or absence of other signals on a channel in order to determine if a channel is occupied or clear, respectively. Carrier sensing via LBT may be one way for fair sharing of the unlicensed spectrum and hence it may be a vital feature for fair and friendly operation in the unlicensed spectrum in a single global solution framework.
- Discontinuous transmission on a carrier with limited maximum transmission duration : In unlicensed spectrum, channel availability cannot always be guaranteed. In addition, certain regions such as Europe and Japan prohibit continuous transmission and impose limits on the maximum duration of a transmission burst in the unlicensed spectrum. Hence, discontinuous transmission with limited maximum transmission duration may be a required functionality for LAA.
- Carrier selection : As there is a large available bandwidth of unlicensed spectrum, carrier selection may be required for LAA nodes to select the carriers with low interference and that may achieve good co-existence with other unlicensed spectrum deployments.
- Transmit Power Control: Transmit Power Control (TPC) is a regulatory requirement in some regions by which the transmitting device should be able to reduce the transmit power by 3dB or 6dB compared to the maximum nominal transmit power. This requirement does not need new specifications.
- Radio Resource Management (RRM) measurements including cell identification : RRM measurements including cell identification may enable mobility between Secondary Cells (SCells) and robust operation in the unlicensed band.
- Channel-State Information (CSI) measurement, including channel and interference : A WTRU operating in an unlicensed carrier should also support the necessary frequency/time estimation and synchronization to enable RRM measurements and for successful reception of information on the unlicensed band.

3GPP is expected to study the support for operation in unlicensed bands in Release 16. Per a study item description for NR unlicensed (NR-U), one may refer to 3GPP TS 38.331, V15.0.0 (2017-12), 3rd Generation Partnership Project; Technical Specification Group Radio Access Network NR Radio Resource Control (RRC) protocol specification (Release 15). The objective is to study NR-based operation in unlicensed spectrum, including initial access, Scheduling/Hybrid Automatic Repeat Request (HARQ), and mobility, along with coexistence methods with LTE-LAA and other incumbent RATs. Some scenarios under study include NR-based LAA cell connected with an LTE or NR anchor cell, as well as NR-based cell operating standalone in unlicensed spectrum.

NR unlicensed (NR-U) may support that a serving cell can be configured with bandwidth larger than 20 MHz. The following options are considered for BWP operation in NR-U. For DL operation, the following options for BWP-based operation within a carrier with bandwidth larger than 20 MHz may be considered:
- Multiple BWPs configured, multiple BWPs activated, a gNB may transmit PDSCH on one or more BWPs.
- Multiple BWPs configured, multiple BWPs activated, a gNB may transmit PDSCH on a single BWP.
- Multiple BWPs configured, a single BWP activated, a gNB may transmit PDSCH on a single BWP if CCA is successful at the gNB for the whole BWP.
- Multiple BWPs configured, a single BWP activated, a gNB may transmit PDSCH on parts or the whole of a single BWP if CCA is successful at the gNB for the whole or parts of the whole BWP, respectively.

Multiple active BWPs and LBT mechanisms in a given frequency carrier may impact BWP and SUL operation as defined initially in NR. Thus, some procedures may be adapted to accommodate this. In particular, procedures may be defined to take into account the plurality of active BWPs, the unavailability of sub-bands and to make use of the diverse available frequency carriers or portions with different associated channel characteristics or regulations.

Additionally, new measurements may assist the network in the configuration of the BWP and/or allow the WTRU to select frequency carriers and/or BWPs to successfully receive downlink control messages or perform uplink transmissions.

A first aspect of the present disclosure concerns the indication of the channel acquisition in the frequency domain. CCA may be performed on contiguous Physical Resource Blocks (PRBs) in multiples of 20 MHz (or multiples of PRBs). A WTRU may be configured with a set of BWPs that are composed of one or more 20MHz sub-bands. When the network acquires the channel, it may transmit a signal to the WTRU indicating the start of the COT (hereinafter termed the pre-signal). However, the WTRU may further need to determine which sub-bands (e.g., which set(s) of PRBs) of the frequency carrier were grabbed and further determine what active DL BWPs and/or portions of configured DL BWPs are acquired by the network.

Moreover, further to signaling the start of the COT and the corresponding acquired bandwidth, it may be beneficial to also inform the WTRU of the duration of the COT.

Furthermore, although the transmission of the pre-signal indicating the start of the COT facilitates its detection with low complexity and is less power consuming than frequent PDCCH monitoring, the WTRU may be required to monitor multiple frequency locations to receive this pre-signal, especially under multiple active DL BWPs operation. To facilitate its detection while reducing the effort of the WTRU, some procedure may need to be defined.

The occupied channel structure may include resources in frequency domain, time domain, and/or spatial domain. The occupied channel may be determined as a function of the medium obtained by a successful channel access procedure (e.g., LBT). And thus, the channel access procedure may imply how much bandwidth is occupied in addition to the timing and duration of when the channel is acquired.

A WTRU may monitor for the presence of a pre-signal transmitted to the WTRU that signals the configuration of an upcoming COT. Such pre-signal may be transmitted to one or more WTRUs in the system.

This pre-signal may either contain information about the gNB's channel acquisition (e.g., time/frequency/spatial resources) or indicate to the WTRU that it has to monitor one or more PDCCHs to receive further downlink control information about an activation of a BWP or an acquisition of channel subbands.

The pre-signal may be provided implicitly via another signal. For example, a sequence used for a Reference Signal (RS) may provide the WTRU with the necessary parameters to operate on a COT. Such parameters may include the PDCCH to be monitored.

In another solution, the pre-signal may be provided explicitly, such as in a bitmap or a short transmission (e.g., one bit information). For example:
- The pre-signal bitmap may indicate the indices of LBT sub-bands acquired by the network. The WTRU may further determine (e.g., be configured with a mapping) which configured active DL BWPs these sub-bands map to. The pre-signal bitmap may be mapped to the LBT sub-bands, the first bit of the sequence may correspond to the sub-band index 0 and the last bit of the sequence may correspond to the last sub-band of the frequency carrier. A 0 bit may indicate that the LBT has failed in the corresponding sub-band, while a 1 bit may indicate that the LBT has succeeded in the corresponding sub-band.
- The entire bandwidth over which the pre-signal is transmitted during a pre-defined number of OFDM symbols may indicate the bandwidth acquired by the gNB.
- A mapping of PRBs over the entire frequency carrier and CORESET may be configured. For example, if the pre-signal is transmitted over the x^{th} PRB or set of PRBs, this may indicate that the WTRU shall monitor the CORESET index y.
- A one-to-one mapping of the pre-signal and sub-bands may be configured. For example, if the WTRU receives the pre-signal in a certain sub-band, the WTRU may monitor the PDCCH in this sub-band. This may further require a mapping of CORESET and search spaces with LBT subbands.
- The pre-signal may be used to indicate to the WTRU that it should monitor the PDCCH in the subband where it has been transmitted.
- A short pre-signal sequence transmitted x PRBs offset from the first PRB of a configured CORESET may indicate to the WTRU that it may monitor the corresponding CORESET.
- The WTRU may receive an indication of acquired LBT sub-bands by the gNBs in the System Information Block (SIB)/ Master Information Block (MIB). If the initial DL BWP or the sub-band of the initial DL BWP where the Cell defining a Synchronization Signal Block (SSB) is located has been acquired by LBT, the WTRU may receive the information in the MIB or SIB. The WTRU may also be configured with a CORESET and a search space to receive SIB in a dedicated DL BWP or sub-band. This configuration may either be common to all WTRUs, a group of WTRUs or be dedicated to a single WTRU. The information about the acquired LBT sub-bands by the gNB may then be broadcasted or transmitted in the corresponding SIB.

To signal the sub-bands grabbed by the network, the subbands may be indexed from 0 to x throughout the frequency carrier, e.g., sub-band index 0 corresponding to the first LBT sub-band and subband index x corresponding to the last LBT sub-band in the serving carrier.

The WTRU may further receive in the corresponding PDCCH a DCI for LBT success indication in the DL sub-bands. A DCI may indicate to the WTRUs of the system the sub-bands that are activated (i.e. acquired by the network).

When a pre-signal as described is successfully received by the WTRU, the WTRU may start monitoring the corresponding CORESET and/or search space.

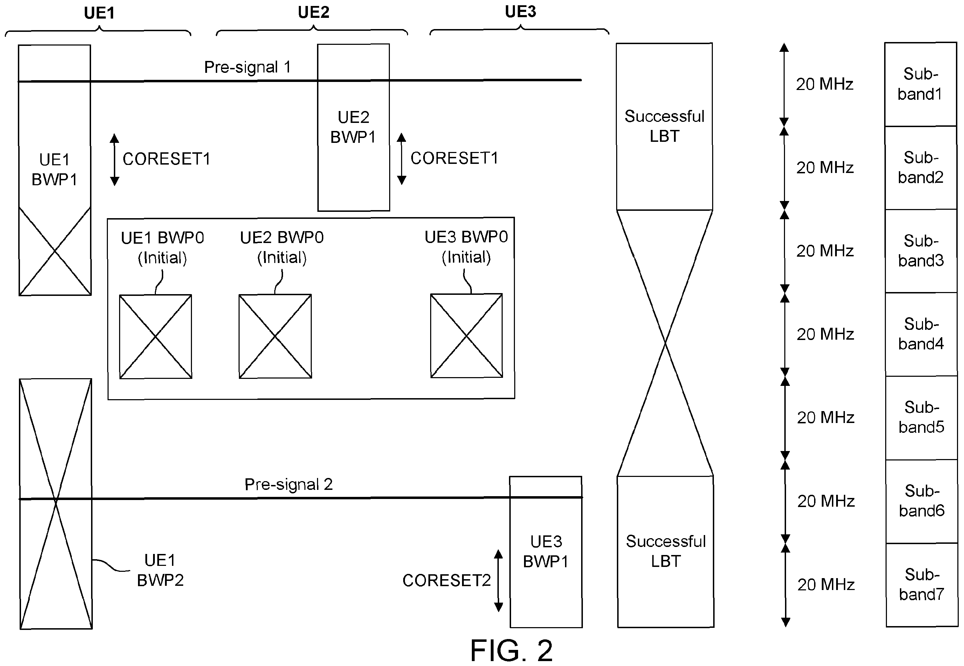

The embodiment of FIG. 2 represents an exemplary NR-U system with three example WTRUs, UE1, UE2 and UE3, in which the initial BWP, BWP0, is not acquired by the network. The UEs are configured with DL BWPs containing the frequency locations where a pre-signal may be received, i.e. where the LBT is successful at the network. Thus, UE1 and UE2 may be configured with DL BWP1 containing the frequency locations where pre-signal 1 may be received, while UE3 is configured with DL BWP1 containing the frequency locations where pre-signal 2 may be received (note that each WTRU has its own distinct BWP indices, i.e., the BWP indexed as BWP1 for UE1 may be a different BWP than the BWP indexed as BWP1 for UE2). Pre-signals indicating the start of the COT are transmitted to the WTRUs. They include a first pre-signal, Pre-signal 1, transmitted in LBT sub-band 1 and a second pre-signal, Pre-signal 2, transmitted in LBT sub-band 6. For UE1 and UE2, the channel is deemed acquired in each UE's respective BWP1 as determined from the reception of pre-signal 1, while for UE3, the channel is deemed acquired in its BWP1 as determined from the reception of pre-signal 2. Thus, according to an exemplary mapping, UE1 and UE2 are configured with CORESET1 located in sub-band 2 as determined from the reception of pre-signal 1 and UE3 is configured with CORESET2 located in sub-band 7 as determined from the reception of Pre-signal 2. All the WTRUs may be configured with a search space (e.g. common search space) to receive a DCI indicating the acquisition of sub-band1, sub-band2, sub-band6, sub-band7.

FIG. 2 shows an embodiment in which WTRUs may detect a pre-signal transmission in BWPs other than the initial BWP. A WTRU may monitor CORESETs and/or search spaces in a secondary set of BWPs (e.g., a configured BWP, possibly not including the initial DL BWP) if the WTRU has not received a pre-signal in its initial DL BWP. For example, the WTRU may monitor an initial DL BWP (BWP0) and only upon not receiving a pre-signal on this initial DL BWP, the WTRU may begin monitoring the second set of BWPs. The set of CORESETs or BWPs to monitor may be determined by the WTRU as a function of time and/or the location of the initial DL BWP.

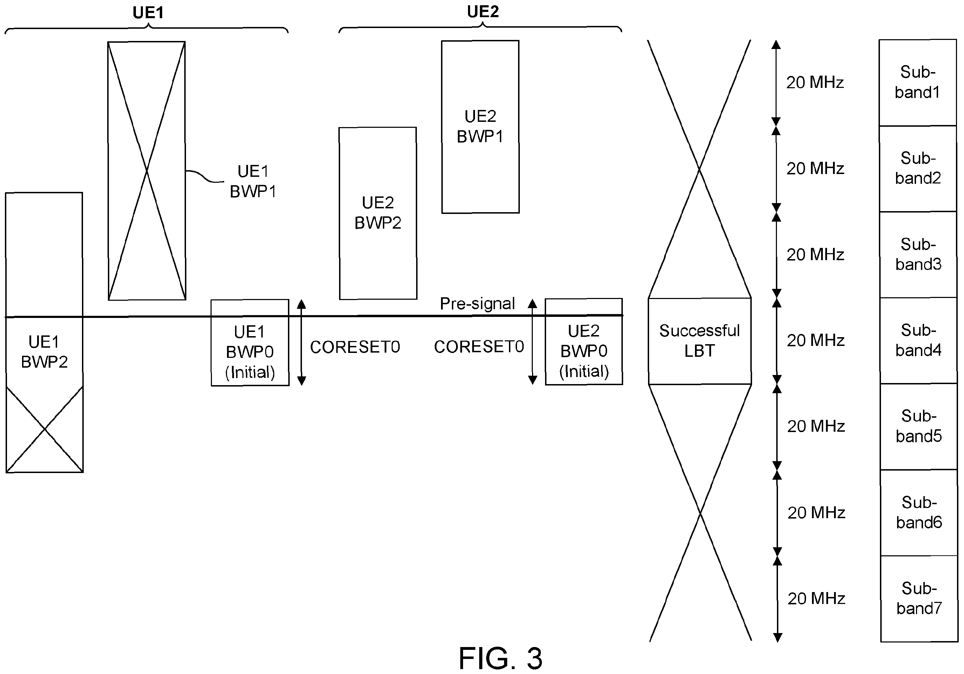

The WTRU may assess the correspondence between LBT sub-bands and the configured BWPs and may be able to determine the configured BWPs or portions of BWPs acquired by the network. As in the example of Figure 3, UE1 may determine that a corresponding portion of DL BWP1 is acquired by the network, while UE2 may determine that its whole BWP1 is successfully acquired.

The duration of the COT may further be signaled to the WTRU either explicitly or implicitly.

The explicit indication may, for example, be that the first set of bits (e.g., first x bits) of the pre-signal may correspond to the LBT sub-bands indication as described above, and the second set of bits (e.g., last y bits) may correspond to the duration of the COT (e.g., number of slots of the COT).

Alternately, the duration of the COT may be implicitly signaled, for example, through a parameter of the pre-signal. For example, the duration of the pre-signal in OFDM symbols may be mapped to the duration of the COT. For example, one OFDM symbol of pre-signal duration may correspond to a certain number of OFDM symbols in the COT.

The pre-signal indicating the start of a COT and/or set of acquired LBT sub-bands by gNBs may be one or a combination of the following signals:
- A Dedicated Reference Signal (DRS) or a Primary Synchronization Signal/Secondary Synchronization Signal (PSS/SSS) may be used as the pre-signal to indicate the start of the COT. In such case, the WTRU may be configured with a frequency location and periodicity of a Synchronization Signal (SS) burst throughout the frequency carrier. For example, one PSS/SSS per sub-band may be configured to the WTRU. The WTRU may only monitor for the pre-signal in the configured DL BWPs. The sequence of the PSS and/or SSS may further indicate the bandwidth of the acquired channel. The acquired channel may be defined by the first PRB and bandwidth of the acquired channel.
- A CSI-RS resource included in the DRS may be used to indicate the first PRB and the bandwidth of the acquired channel.
- An RRC message for WTRUs configured with one or more active BWP(s) (e.g., a BWP or set thereof confined to resources within the bandwidth acquired) during the signaled COT. For example, the WTRU may receive a RRC (re-)configuration of firstActiveDownlinkBWP-ld indicating the new activated DL BWPs. The configuration of these activated DL BWPs may further signal if the whole DL BWP was acquired by the network or which LBT sub-bands within the configured DL BWP were acquired.
- A Master Information Block (MIB), for example, which may be received once the initial DL BWP has been acquired and the associated Synchronization Signal-Physical Broadcast Channel (SS-PBCH) block is transmitted.

The WTRU may be configured with multiple CORESETs and search spaces for the System Information Block (SIB) acquisition over the entire frequency carrier. If the pre-signal is received, this may indicate to the WTRU to monitor one or more CORESETs where the SIB may be transmitted.

A pre-signal, or COT preamble, may additionally be used to indicate the start of a gNB acquired COT (or DL burst) or may be contained in a signal used to indicate the start of a gNB acquired COT (or DL burst).

To avoid the need to monitor for a pre-signal in multiple frequency locations, the WTRU may expect to receive the pre-signal in some pre-defined frequency locations. This may reduce the pre-signal detection complexity for the WTRU and may reduce the need for a cell to transmit pre-signals in multiple frequency locations. For example, the WTRU may expect to receive the pre-signal in the sub-band corresponding to the initial DL BWP.

FIG. 3 illustrates an embodiment with two WTRUs, UE1 and UE2, in the case in which the acquired channel by each WTRU contains the initial BWP which may be common to all the WTRUs in the system, e.g., BWP0. In this case, UE1 and UE2 may receive the pre-signal in the initial active DL BWP(s), BWP0. UE1 and UE2 may be configured with a CORESET (CORESET0) and a common search space to receive a Downlink Control Information (DCI) indicating the acquired sub-bands, i.e., sub-band 4, during the signaled COT. The WTRUs may also receive the System Information (SI) within the acquired initial DL BWP indicating the acquired sub-bands. As the WTRUs are configured with multiple active DL BWPs, they may expect to receive a pre-signal in different frequency locations, i.e. different DL BWPs, based on where the successful LBT may be performed at the transmitter side. Thus, UE1 and UE2 also monitor BWP1 and BWP2 for this purpose. Moreover, portions of the BWPs may be discarded (such as BWP1 and a portion of BWP2 for UE1) only for the duration of the COT. This does not prevent the WTRUs from receiving an indication of another COT for another set of sub-bands in these DL BWPs.

If the WTRU has received a DCI for DL BWPs activation during a COT (i.e., upon receiving a pre-signal indicating the start of a COT), the WTRU may consider that the active DL BWPs are acquired by the gNB.

In one exemplary embodiment, a WTRU monitors all its active DL BWPs for pre-signal reception. For instance, the WTRU may receive a pre-signal in one DL BWP that may activate or trigger the monitoring of the associated CORESET and search space (e.g., the CORESET in the same DL BWP where the pre-signal was received).

For example, with reference again to FIG. 2, UE 1, UE2 and UE3 all monitor a common BWP, BWP0. UE1 also monitors two other BWPs, namely, its BWP1 and BWP2. UE2 also monitors one other BWP, namely, its BWP1. Finally, UE3 also monitors one other BWP, its BWP1. Note that BWP1 for UE1 and BWP1 for UE2 overlap with each other. UE1 and UE2 both receive the pre-signal, Pre-signal 1, in their respective BWPs1. Consequently, UE1 and UE2 start monitoring the associated CORESET1 for DCI reception. However, UE3 is not configured with a DL BWP where the first pre-signal, Pre-signal 1, is transmitted. Thus, UE3 receives another pre-signal, Pre-signal 2, in its active DL BWP1 that triggers the monitoring of the CORESET2.

The pre-signal may be transmitted at a time offset from the first PRB of the CORESET, for example, a given number of PRBs before or after the first PRB. If the WTRU receives such pre-signal, the WTRU may start monitoring the corresponding PDCCH. In the corresponding PDCCH, the WTRU may receive a DCI for BWP activation or sub-bands acquisition.

For example, the WTRU may be configured with a mapping of PRBs to BWPs. If the pre-signal is received in a set of PRBs mapped to a BWP, the WTRU may consider the BWP as activated. Such a mapping may be per BWP. As such, a pre-signal sent on a first BWP may point to a second BWP being activated.

A WTRU may be configured to determine the BWP (or the number of BWPs) to monitor for pre-signal based on predefined rules. For example, the WTRU may be configured to monitor a pre-signal in a targeted BWP (e.g., current active BWP or the BWP in which it received the most recent DL signal). If a pre-signal is not detected in that targeted BWP (possibly for a configured period of time), then the WTRU may be configured to monitor the pre-signal in one or more other BWP(s) (e.g., in any of the BWPs that were active in the past X ms). Upon failure to detect the pre-signal in previous active BWPs, the WTRU may add initial/default BWPs to the list of BWPs to monitor for pre-signal. Upon failure to detect the pre-signal (possibly for a configured period of time), the WTRU may monitor the pre-signal in all the configured BWPs. If a pre-signal is not detected in any of the configured BWPs (possibly for a configured period of time), the WTRU may include the whole carrier bandwidth for pre-signal monitoring.

A WTRU may be configured with a window to monitor for the pre-signal having a starting time, a time duration, and a periodicity. Such configuration may be received by an RRC configuration and may be applicable to the WTRU when it is in connected mode. The monitoring may only be performed outside of a DL burst. The time window may comprise multiple occasions, each corresponding to a monitoring time and duration of one indicated sub-band. The first occasion of the window may for example be used to monitor a specific sub-band, the second occasion another sub-band, etc.

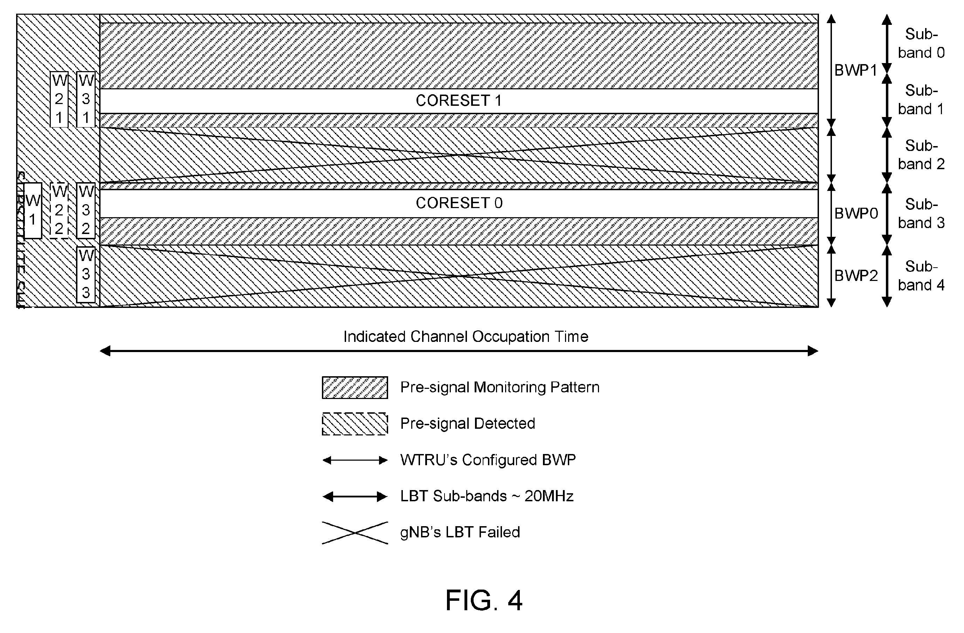

In another solution, the monitoring of sub-bands may be incremental in the time window. An example of an incremental monitoring process implemented by a WTRU is depicted in Figure 4, where the first occasion of the window (w1 in the left) is dedicated to the monitoring of sub-band3, the second monitoring occasion (w21 and w22 in the middle) is dedicated to the monitoring of sub-band1 and subband3, and finally the third monitoring occasion of the window (w31, w32 and w33 in the right) is dedicated to the monitoring of sub-band1, sub-band3 and sub-band4. In the represented example, a pre-signal is detected at the second monitoring occasion at sub-band3 in the active DL BWP0, that triggers the monitoring of the CORESET0.

Upon detecting a pre-signal in any configured or signaled DL BWP or sub-band, the WTRU may activate the corresponding DL BWP or sub-band. This activation may be part of a two-step method in combination with the DL BWP activation received in a DCI. For example, in a first step, a UE may be indicated to switch DL BWP to a target DL BWP. The UE may then attempt to receive a pre-signal indicating that the target DL BWP is indeed activated. In another method, the activation of a DL BWP by pre-signal detection may override the indicated target DL BWP determined from a previously received DCI indication. In the case of overriding activation, the WTRU may deactivate the DCI activated DL BWP and activate the DL BWP where the pre-signal is detected. DL BWP switching via pre-signal detection may only be applicable outside of a DL burst. During a DL burst, on the other hand, the WTRU may only activate or deactivate BWPs based on (1) a DCI message, (2) a RRC message, (3) fallback due to inactivity timer expiry, and/or (4) BWP linkage based switching.

Upon detecting a pre-signal indicating that two or more BWPs are acquired, the WTRU may select a BWP (e.g., consider such acquired BWP as active) from the set or a subset of BWPs (possibly up to a maximum number of simultaneous active BWPs) to receive the PDCCH, based on prioritization rules, such as:
- selecting the last active BWP if the pre-signal indicates to the WTRU that it should select the last active BWP,
- if the last active BWP is not acquired, then select the initial/default BWP if the pre-signal indicates to the WTRU that it should select the initial/default BWP,
- if the initial/default BWP is not acquired, then select any of the configured BWPs if indicated by the pre-signal. The WTRU may further prioritize BWPs with best DL quality,
- if none of the configured BWPs is acquired, then select any BWP indicated by the pre-signal. The WTRU may further prioritize BWPs with the best DL quality.

In an alternative monitoring scheme, a WTRU may determine a new BWP as an aggregate of all the BWPs (or sub-bands) indicated as acquired. For example, the WTRU may determine a BWP for monitoring as the frequency range that accommodates at least the set of acquired sub-bands. For instance, in order to monitor one contiguous frequency range for simplicity, the BWP may monitor subbands that span all of the acquired BWPs but includes additional, contiguous BWPs that are not indicated as acquired. In another example, the WTRU may determine a new BWP as a set of contiguous acquired BWPs (or sub-bands), e.g., the largest set thereof.

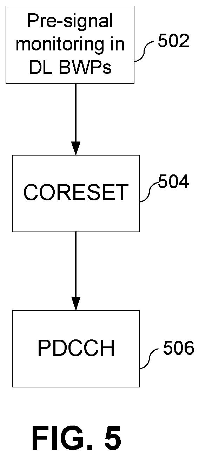

FIG. 5 is a flowchart illustrating operation of a WTRU for obtaining information about resources related to an upcoming COT in accordance with an exemplary embodiment.

At 502, the WTRU may monitor for the presence of a pre-signal signaling the configuration of an upcoming COT in one or more BWPs configured for the WTRU.

At 504, after receiving the pre-signal, the WTRU may determine a CORESET that it shall monitor, for example, by using a mapping between the PRB or set of PRBs in the BWP in which the pre-signal was received and a CORESET index.

At 506, the WTRU may decode a Physical Downlink Control Channel (PDCCH) within the determined CORESET.

A second aspect of the present disclosure concerns the bandwidth part (BWP) linkage for the random access (RA) procedure. NR may use one-to-one BWP linkage limitation. In NR, when the WTRU initiates a Random Access (RA), it may switch its active DL BWP to the DL BWP with the same BWP-ld as the active UL BWP. This linkage was initially introduced for Contention Based Random Access (CBRA) for the network to know where to transmit a Random Access Response (RAR) when it receives a preamble, i.e., Msg1 (RACH request) of the RA procedure. The linkage was extended to Contention Free Random Access (CFRA) for consistency. However, this static linkage may not be applicable to NR-U.

In NR-U, the linked DL BWP where the WTRU is expecting to receive the DL messages during a RA may be busy, while other configured DL BWPs may have been acquired by the network. Similarly, a WTRU's active UL BWP may be busy and the WTRU may need to switch its active UL BWP to transmit the preamble.

Thus, there is a need for a mechanism that would permit multiple active BWPs and the associated behavior for transmitting and receiving RA messages.

If the WTRU is configured with multiple active BWPs, the one-to-one BWP linkage introduced in NR may not be ideal. With multiple active DL BWPs, the reception of the DL messages during a RA may depend on the capability of the WTRU to monitor multiple PDCCHs at the same time or how the WTRU determines in which of the active DL BWPs it is expecting to receive the Random Access Response (RAR).

The following exemplary linkages may either be explicit linkages (e.g., an identifier, x, of UL BWP may be linked to an identifier, y, of DL BWP) or implicit. The linkage also may be at the level of LBT subband granularity, rather than BWP granularity. For the remainder of this text, BWP and LBT sub-band may be used interchangeably. For example, there may be a linkage between reception of a pre-signal in a first LBT sub-band and the selection of a second LBT sub-band for the transmission of a random access preamble. An implicit linkage may be that the Physical Random Access Channel (PRACH) resource or set of PRACH resources associated with an UL BWP are linked to a CORESET or search space configured in the DL BWP. In such a way, WTRUs configured with multiple overlapping DL BWPs are not required to switch their active DL BWP if it contains the CORESET associated with the linked uplink PRACH resource where the WTRU transmitted the preamble.

A first embodiment may be a one-to-many linkage, i.e. one UL BWP is linked to one or more DL BWPs.

According to an example, the WTRU may monitor multiple PDCCHs at the same time. Then, the WTRU may receive the RAR in one or multiple of the linked active DL BWPs. This may depend on the WTRU capability, e.g., the case of a WTRU with multiple RF chains.

According to an example, the WTRU may monitor control regions of one BWP at a time.

For example, the WTRU may perform a PDCCH monitoring sweeping in time for RAR reception. The WTRU may be configured with a periodic window for PDCCH monitoring where a slot or a group of slots in the window are associated with PDCCH within a given DL BWP. The RAR timing in the corresponding DL BWP may further match the allocated time window.

For example, the WTRU may only monitor for the RAR in the sub-bands acquired by the gNB upon receiving a COT preamble. If multiple DL BWPs are activated, the WTRU may receive the RAR in the DL BWP with random access search space associated with the lowest frequency band. Alternately, the WTRU may determine the DL BWP where it may receive the RAR based on a function. Such function may use as input at least one of the frequency of the random access CORESET, the timing of the RA preamble transmission, or the timing of the associated Dedicated Reference Signal (DRS) or Synchronization Signal Block (SSB). The WTRU may also determine the DL BWP where it may receive the RAR based on the type of random access it is performing and on the configuration of associated parameters. For example, for beam failure recovery, among the linked active DL BWPs, the WTRU may monitor a DL BWP configured with a recovery search space.

According to an example, the WTRU may indicate to the network its preference among the configured active DL BWPs for DL message reception during the RA procedure. Such preference may be based on measurements performed by the WTRU on a set of resources contained in the active DL BWP to permit the network to be aware of possible hidden nodes, i.e., nodes that are visible to the WTRU but not to the transmitter that may perform the LBT. For example, a mapping of the preamble transmitted by the UE and DL BWPs may enable the WTRU to transmit a RA preamble associated with a DL BWP in which it prefers to receive the RAR. For example, a WTRU may be configured with Random Access Channel (RACH) occasions associated with each DL BWP.

A second embodiment may be a many-to-one linkage, i.e. multiple UL BWPs are linked to the same DL BWP.

If the WTRU is configured with multiple UL BWPs and DL BWPs, it may further be configured with a linkage between multiple UL BWPs and one DL BWP.

The WTRU may be configured with different types of linkage, but only activate the many-to-one linkage when it assesses that the channel associated with the DL BWP is acquired.

For example, this type of linkage may be applicable if a pre-signal for COT indication associated with the bandwidth of the linked DL BWP has been transmitted to the WTRU prior to the random-access initiation.

The WTRU may select any of the UL BWPs for preamble transmission and is expecting to receive the RAR and subsequent messages in the linked DL BWP. For example, the WTRU may select (e.g., autonomously select) the UL BWP based on a UL BWP selection rule. The rule may include at least one of: the UL BWP with the lowest channel occupancy (or channel occupancy below a threshold), the UL BWP with highest Reference Signal Received Quality (RSRQ), the UL BWP associated with a DRS/SSB, the UL BWP associated with a traffic type, the UL BWP indicated in a random access command. The WTRU may monitor the linked DL BWP for RAR and subsequent DL messages. The WTRU may also select the UL BWP based on measurement (e.g., Reference Signal Received Power (RSRP), RSRQ, Signal to Interference plus Noise Ratio (SINR), Received Signal Strength Indication (RSSI), Channel Occupancy (CO)) of one or a set of configured SSB and/or CSI-RS resources associated with the corresponding BWPs. The WTRU may also select the UL BWP based on the configuration of dedicated RACH resources, e.g., the WTRU may select the UL BWP with dedicated PRACH resources. The WTRU may also select the UL BWP based on the type of RA and configuration of the associated parameters. For example, for a beam failure recovery request, the WTRU may select the UL BWP configured with recovery resources. For example, for SI request, the WTRU may select the UL BWP configured with random access preambles and/or PRACH occasions for SI request.

According to another embodiment, the WTRU may select the UL BWP in which to perform RACH based on characteristics of the linked DL BWP(s). For example, the WTRU may be configured with PRACH resources in multiple UL BWPs. In order to determine which UL BWP to switch to and transmit the preamble, the WTRU may use the UL BWP/DL BWP linkage. For example, the WTRU may select the UL BWP(s) linked to the DL BWP(s) that was/were acquired by the gNB e.g., based on a reception of a pre-signal. If multiple DL BWPs are acquired, the WTRU may perform an UL BWP selection based on measurement results of the acquired DL BWP, e.g., the WTRU may select the UL BWP linked to the DL BWP with the highest measurement result (e.g., RSRQ). If an LBT on the selected UL BWP is not successful, the WTRU may transmit the preamble, e.g., Msg1, in any acquired UL BWP or sub-band. A mapping of the preamble and/or PRACH resources may permit a WTRU to indicate this fallback. A priority rule may be used to determine in which DL sub-band the gNB may then transmit the pre-signal and the WTRU may monitor for RAR, e.g., the lowest acquired sub-band in frequency.

If a linked DL BWP comprises only one sub-band, the WTRU may detect the pre-signal and may monitor the associated sub-band for RAR. If the linked DL BWP comprises more than one acquired subband (i.e. multiple detected pre-signals), the WTRU may be configured to monitor more than one sub-band for RAR in the linked DL BWP.

In another embodiment, the WTRU may be configured with an association between PRACH resources and/or preambles and sub-bands in the linked DL BWP to indicate in the preamble transmission the DL sub-band(s) where it may expect to receive the RAR.

If there are multiple active BWPs and the WTRU receives an indication of the COT structure of a current DL burst, the WTRU may report in Msg1 or Msg3 (RRC Connection Request) the sub-band identifier of the best BWP/sub-band to transmit DL messages. The determination of the best sub-band may be based on a sub-band measurement result. For example, it may be based on channel occupancy, to assist the network to determine the existence of hidden nodes.

According to a further embodiment, while multiple DL BWPs are acquired by the network based on successful LBT on multiple sub-bands, it may be beneficial to indicate to the WTRU where to receive the DL messages during a random access procedure. This indication may permit the WTRU to monitor the search space for RAR and Msg4 (Contention Resolution Message) in only one DL BWP. This may also permit the gNB to indicate to the WTRU which DL BWPs among the active DL BWPs are acquired by the network while a random access is ongoing. For example, if the COT associated with the DL BWP where the WTRU has received Msg2 (RAR) expires shortly and the network has acquired a sub-band in another DL BWP, it may be beneficial to indicate in Msg2 (RAR) that the subsequent messages will be received in the other DL BWP. For load balancing among multiple DL BWPs, it may also be beneficial to be able to signal another DL BWP for RA messages reception.

Similarly, when the WTRU is configured with multiple active DL BWPs, it may be beneficial to allow the WTRU to indicate the preferred DL BWP for RAR and subsequent messages (i.e. Msg4 and possibly other messages such as RRC messages, DCIs, SI, etc.) reception based on some criteria. This indication may, for example, be based on a measurement performed by the WTRU and may help attenuate the hidden nodes problem.

A third aspect of the present disclosure concerns BWP inactivity timer operation and associated behavior of the WTRU. Indeed, other BWP operation procedures, such as fallback to initial/default BWP when an inactivity timer expires, as agreed in NR, may not be applicable to NR-U. In particular, the inactivity timer may expire often due to an LBT failure, resulting in multiple fallbacks of the WTRUs in the system to the initial BWP (thus overcrowding this BWP). Additionally, the initial/default DL BWP may not be available due to LBT mechanisms. Hence, new mechanisms are desirable to specify the behavior of the WTRU in such cases. Finally, it has been considered beneficial to allow multiple active DL BWPs in NR-U. Hence, the inactivity timer operation in such case has to be properly defined.

The BWP inactivity timer may expire often due to LBT failure. Moreover, the current behavior in NR, wherein the UE switches to the initial/default downlink bandwidth part, may not be applicable since the initial/default DL BWP may not be acquired by the gNB (e.g., due to a high channel occupancy).

To operate under multiple active DL BWPs operation, different configurations of the BWP inactivity timer may be considered.

In one embodiment, the WTRU may be configured with a single inactivity timer for all active DL BWPs. If an additional DL BWP is activated to a WTRU, the inactivity timer may be restarted.

In another embodiment, the WTRU may be configured with an inactivity timer applicable to a set of one or more DL BWPs. The sets of DL BWPs may have resources that overlap at least one LBT subband. Upon expiration of an inactivity timer for a set of DL BWPs, the WTRU may consider that that DL BWP is inactive. Furthermore, if there are no other currently active DL BWPs, the WTRU may switch to (or activate) the initial DL BWP.

The BWP inactivity timer may start/re-start/stop/pause depending on the status of a COT signaled to the WTRU. Such a timer may be deemed a COT-duration based inactivity timer. For example, the WTRU may only run an inactivity timer for a DL BWP if there is an active COT in all, some, or at least one, of the LBT sub-bands associated with the DL BWP. If the above condition is not met, the WTRU may pause or suspend an inactivity timer for that DL BWP or set of DL BWPs. The WTRU may re-start a paused inactivity timer upon determination that all, some, or at least one, of the LBT sub-bands is acquired by the gNB (e.g. upon reception of a pre-signal).

The WTRU may maintain more than one timer. For example, on top of the regular BWP-specific inactivity timer as in NR, the WTRU may be configured with an additional timer for BWP inactivity during the COT (e.g. a COT-duration based inactivity timer). These two timers may further be associated with different behaviors of the WTRU at their expiry as described in the following paragraph. For example, the WTRU may maintain two BWP inactivity timers, one during a COT and one outside the COT, and may determine which one to use based on the detection of the pre- signal.

The COT-duration based inactivity timer associated with a DL BWP or a set of DL BWPs may start or re-start at the beginning of the COT. For example, the WTRU may start the timer when it has received a COT pre-signal or a DCI indicating the acquisition of the associated DL BWP. The WTRU may stop or pause or suspend the timer at the end of the COT, if the COT duration has been explicitly signaled. Otherwise, the WTRU may stop the timer at the end of the regulatory maximum channel occupancy time or any other predetermined duration.

If the WTRU is configured with more than one active DL BWP and if the BWP inactivity timer associated with one of the active DL BWPs expires, the WTRU may autonomously deactivate the corresponding DL BWP.

If the WTRU has only one active DL BWP, and an inactivity timer expires (e.g. if the COT-duration based inactivity timer expires but the regular inactivity timer is still running), the WTRU may switch to another configured DL BWP for which it has received an indication of channel acquisition (e.g., COT pre-signal). The determination of the target DL BWP may depend on any one or more of the following.

In one embodiment, if the WTRU has received a pre-signal/DCI indicating the start of a COT in a non-active DL BWP, the WTRU may switch its active DL BWP to this BWP.

In one embodiment, if multiple BWPs have been acquired by the gNB, the WTRU may switch to the DL BWP with the highest measured RSSI.

In one embodiment, if multiple BWPs have been acquired by the gNB, the WTRU may switch to the DL BWP with the highest number of best beams (e.g., above a pre-defined threshold).

If the WTRU has autonomously switched to a DL BWP other than the initial/default DL BWP, the WTRU may inform the network of the switch. For example, the WTRU may transmit an UL message (e.g., Uplink Control Information (UCI)) to indicate the new activated DL BWP.

A fourth aspect of the present disclosure concerns the selection of UL and DL BWPs for receiving and/or transmitting in an unlicensed environment. In NR-U, when multiple UL and DL BWPs are either available for receiving and/or transmitting, the WTRU may need to select the BWP to activate or to transmit an indication to the network regarding which DL BWP has to be used for DL transmission. This indication is especially beneficial to cope with the hidden node problems where a plurality of DL BWPs may have been acquired by the network, but one specific band may be more beneficial for a given WTRU (e.g., with regard to interference and/or channel conditions for the reception of DL messages).

The WTRU may be configured with BWP specific measurement events and reporting in order to assist the network with configuring the active DL BWPs and/or activating/de-activating BWPs.

A WTRU may be configured with one or a set of CSI-RS resources confined within a specific frequency band.

In one embodiment, one or a set of CSI-RS resources are configured over each of the configured DL BWPs.

In one embodiment, one or a set of CSI-RS resources are configured over each of the active DL BWPs.

In one embodiment, one or a set of CSI-RS resources are configured over each of the LBT subbands.

A WTRU may be further configured with a measurement event allowing the triggering of a measurement report when one CSI-RS or a set of configured CSI-RS resources satisfy a given measurement result criterion. This criterion may be any one of RSRP, RSRQ, SINR, RSSI, channel occupancy or any combination thereof.

In one embodiment, a measurement report may be triggered if a measured quantity or a combination of measured quantities associated with one DL BWP is above a threshold. For example, if the measured RSRP and RSSI of CSI-RS in any of the configured DL BWPs is above a threshold, a measurement report may be triggered.

A measurement report may be triggered if a measured quantity or a set of measured quantities associated with CSI-RS resources over one DL BWP is an offset better, e.g., a certain number of dB higher, than the measured quantity in resources over another configured DL BWP. For example, a report may be triggered if the RSSI associated with a set of CSI-RS resources over one non-active DL BWP is an offset lower, i.e., a certain number of dB lower, than the measured RSSI associated with CSI-RS resources over the active DL BWP.

If the WTRU has received an indication that a given BWP has been acquired by the network (e.g., COT pre-signal), the WTRU may report the measurements associated with CSI-RS resources in the associated DL BWPs.

The measurement report may include the measurement results associated with the BWP-specific measurement results.

A WTRU may only maintain or perform measurements on CSI-RS associated with a BWP upon being informed that such a BWP has been acquired by the gNB.

A fifth aspect of the present disclosure concerns the operation of supplementary uplink (SUL) and the fallback to SUL in NR-U. In NR-U, although the diversity of BWPs and associated LBT sub-bands in a wideband carrier may allow the network to increase the chance of channel acquisition and successful UL/DL transmissions, the channel may be loaded or experience a high level of interference due to sharing of the channel by different nodes potentially from different operators.

Supplementary uplink (SUL) has been introduced in NR to cope with the limited uplink coverage in high frequency scenarios, but an additional uplink carrier for UL transmission fallback may also be beneficial in an unlicensed environment where the channel in a regular carrier is shared by different uncoordinated nodes.

Selection of SUL based on the received power in the DL may also be impacted by the maintenance of a plurality of active DL BWPs by the WTRU, and a specific behavior may be needed to trigger the fallback to a more reliable uplink. Moreover, if LBT is performed per sub-band, different BWPs may experience different levels of interference and/or the reference signal used as path loss reference may not be transmitted at RA initiation.

In one embodiment, if the regular uplink (RUL) in a cell is assessed as unreliable for an uplink transmission, the WTRU may switch its active UL carrier to a supplementary uplink carrier (SUL).

The SUL may operate in any of the following deployment scenarios:
- SUL in unlicensed and RUL/DL in unlicensed;
- SUL in licensed, RUL/DL in unlicensed: such deployment may be beneficial to allow the WTRU to select the licensed UL carrier if the RUL is loaded or, if due to a high level of interference, the WTRU is not able to successfully transmit in the UL;
- SUL in licensed, RUL in unlicensed, DL in licensed;
- SUL in licensed, RUL in licensed, DL in unlicensed.

The WTRU may need to estimate the DL reception of the cell to trigger the selection of SUL for a RA procedure. This estimation may be based on a path loss reference that can either be performed in a DL BWP or in a plurality of DL BWPs if the WTRU is configured in multiple configured BWPs.

The triggering condition may be based on measurements by the WTRU. In one embodiment, the WTRU may switch to the SUL based on one or a combination of the following conditions:
- The WTRU is not able to perform a successful CCA in the RUL carrier. For example, the WTRU is not able to successfully grab the channel in any of the UL BWPs for a certain amount of time;
- The channel load (e.g., RSSI and/or channel occupancy) of the RUL carrier is above a threshold;
- The channel load associated with the active UL BWP in the RUL is above a threshold;
- The average value of the channel load in all active UL BWPs in the RUL is above a threshold;
- The channel load associated with the SUL carrier is below a threshold and the channel load associated with the RUL is above a threshold;
- The average channel load associated with the configured UL BWP in the SUL is an offset lower than the average channel load associated with the active UL BWP in the RUL;
- The RSRP and/or RSRQ and/or SINR of the DL frequency carrier is below a threshold;
- The RSRP and/or RSRQ and/or SINR of the DL BWP and/or the average value of the measurement result of all the active DL BWPs is below a threshold.

The WTRU may be configured with a set of rules in order to evaluate the downlink signal quality and determine if a selection of SUL is needed.

In one embodiment, the WTRU may determine the DL reference path loss and link quality based on a measurement of any DL BWP where it has received an indication of successful LBT (e.g., based on a COT pre-signal reception as described).

In one embodiment, the WTRU may perform such evaluation based on a measurement of the DL BWP(s) linked to the configured active BWP(s) in RUL carrier. Such configuration may be specifically received by the WTRU in the Radio Resource Control (RRC) configuration. Such linkage may be based on the LBT sub-bands associated with the UL and DL BWPs. For example, to select SUL for its UL transmission, the WTRU may determine that a measurement result in the DL BWP(s) comprising the same LBT sub-band(s) as the active UL BWP(s) is below a threshold, Th.

In one embodiment, the WTRU may be configured with one or a set of reference signals associated with each UL BWP in the RUL carrier. The WTRU may select SUL if the measurement results of all reference signals are below a pre-defined threshold, or the WTRU may select SUL if the average measurement result of all reference signals associated with all the active UL BWPs is below a threshold, or the UE may select SUL if the reference signal associated with the UL BWP where it has successfully performed LBT is below a threshold.

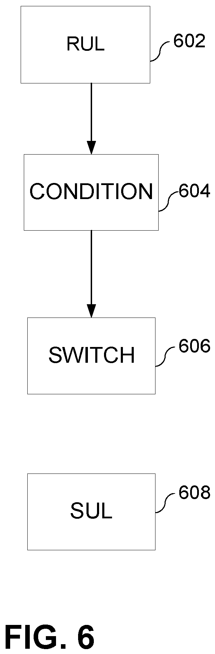

FIG. 6 is a flowchart illustrating an embodiment of the operation of a WTRU for switching from a RUL to a SUL.

At 602, the WTRU may be operating on a Regular Uplink Carrier (RUL) which may be in licensed or unlicensed spectrum. Furthermore, the WTRU may be continuously measuring a plurality of channel conditions.

At 604, the WTRU, responsive to one or more measurements, may determine that the channel conditions have changed sufficiently to merit a possible switch from RUL to a Supplemental Uplink Carrier (SUL).

At 606, in response to such determination, the WTRU may switch its active UL carrier to the SUL, which may be in the licensed or unlicensed spectrum.

At 608, the WTRU may begin operating on the SUL.

### CONCLUSION

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU 102, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the representative embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (e.g., but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of any UE recited herein, are provided below with respect to FIGS. 1A-1D.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

Throughout the disclosure, one of skill understands that certain representative embodiments may be used in the alternative or in combination with other representative embodiments.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WRTU, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits.

The data bits may also be maintained on a computer readable medium including magnetic disks, optical disks, and any other volatile (e.g., Random Access Memory ("RAM")) or non-volatile ("e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

## Claims

1. A method, implemented by a wireless transmit/receive unit, WTRU, configured to manage a plurality of downlink, DL, bandwidth parts, BWPs, including an initial/default DL BWP, the method comprising:
receiving information related to a first channel occupancy time, COT;
selecting one or more active DL BWPs for the WTRU among the plurality of DL BWPs for the first COT based on the received information;
receiving information indicating an inactivity timer applicable for the one or more active DL BWPs;
starting the inactivity timer when the first COT begins;
receiving first downlink control information, DCI, on the one or more active DL BWPs during the first COT;
pausing the inactivity timer when the first COT ends;
starting the inactivity timer when a second COT begins;
deactivating the one or more active DL BWPs and activating the default BWP based on the inactivity timer expiring during the second COT; and
after activating the default BWP, receiving second DCI on the default BWP during a third COT,
wherein the second COT is later than the first COT, and the third COT is later than the second COT.

2. A method, implemented by a wireless transmit/receive unit, WTRU, configured to manage a plurality of downlink, DL, bandwidth parts, BWPs, including an initial/default DL BWP, the method comprising:
receiving information related to a first channel occupancy time, COT;
selecting one or more active DL BWPs for the WTRU among the plurality of DL BWPs for the first COT based on the received information;
receiving information indicating an inactivity timer applicable for the one or more active DL BWPs;
starting the inactivity timer when the first COT begins;
receiving first downlink control information, DCI, on the one or more active DL BWPs during the first COT;
pausing the inactivity timer when the first COT ends;
starting the inactivity timer when a second COT begins;
receiving second DCI on a DL BWP among the one or more active DL BWPs during the second COT based on the inactivity timer not having expired during the second COT,
wherein the second COT is later than the first COT.

3. The method of any one of claims 1-2, further comprising:
receiving information related to the second COT prior to the receiving of the second DCI.

4. The method of claim 3, wherein the information related to the first COT, and/or the information related to the second COT, and/or, in case claim 3 is dependent on claim 1, information related to the third COT, is received in at least one of: a COT preamble, a System Information Block, SIB, a Master Information Block, MIB, and a DCI.

5. The method of any one of claims 1-4, wherein the one or more active DL BWPs are associated with one or more control resource sets, CORESETs, and the first DCI is received using the one or more CORESETs.

6. The method of any one of claims 1-5, wherein the one or more active DL BWPs are associated with a set of Physical Resource Blocks, PRBs, and/or a set of Listen Before Talk, LBT, sub-bands.

7. The method of any one of claims 1-6, further comprising:
wherein the information related to the first COT includes information indicating a duration of the first COT.

8. The method of any of claims 1-7, wherein the duration of the first COT is an integer number of slots or orthogonal frequency division multiple access, OFDM, symbols.

9. A wireless transmit/receive unit, WTRU, configured to manage a plurality of downlink, DL, bandwidth parts, BWPs, including an initial/default DL BWP, the WTRU comprising:
a processor and a transceiver, wherein the WTRU is configured to:
receive information related to a first channel occupancy time, COT;
select one or more active DL BWPs for the WTRU among the plurality of DL BWPs for the first COT based on the received information;
receive information indicating an inactivity timer applicable for the one or more active DL BWPs;
start the inactivity timer when the first COT begins;
receive first downlink control information, DCI, on the one or more active DL BWPs during the first COT;
pause the inactivity timer when the first COT ends;
start the inactivity timer when a second COT begins;
deactivate the one or more active DL BWPs and activate the default BWP based on the inactivity timer expiring during the second COT; and
after activating the default BWP, receive second DCI on the default BWP during a third COT,
wherein the second COT is later than the first COT, and the third COT is later than the second COT.

10. A wireless transmit/receive unit, WTRU, configured to manage a plurality of downlink, DL, bandwidth parts, BWPs, including an initial/default DL BWP, the WTRU comprising:
a processor and a transceiver, wherein the WTRU is configured to:
receive information related to a first channel occupancy time, COT;
select one or more active DL BWPs for the WTRU among the plurality of DL BWPs for the first COT based on the received information;
receive information indicating an inactivity timer applicable for the one or more active DL BWPs;
start the inactivity timer when the first COT begins;
receive first downlink control information, DCI, on the one or more active DL BWPs during the first COT;
pause the inactivity timer when the first COT ends;
start the inactivity timer when a second COT begins;
receive second DCI on a DL BWP among the one or more active DL BWPs during the second COT based on the inactivity timer not having expired during the second COT,
wherein the second COT is later than the first COT.

11. The WTRU of any one of claims 9-10, wherein the WTRU is further configured to receive information related to the second COT prior to the receiving of the second DCI.

12. The WTRU of claim 11, wherein the WTRU is further configured to receive the information related to the first COT, and/or the information related to the second COT, and/or, in case claim 11 is dependent on claim 9, information related to the third COT, in at least one of: a COT preamble, a System Information Block, SIB, a Master Information Block, MIB, and a DCI.

13. The WTRU of any one of claims 9-12, wherein the one or more active DL BWPs are associated with one or more control resource sets, CORESETs, and wherein the WTRU is further configured to receive the first DCI using the one or more CORESETs.

14. The WTRU of claim any one of claims 9-13, wherein the one or more DL BWPs are associated with a set of Physical Resource Blocks, PRBs, and/or a set of Listen Before Talk, LBT, sub-bands.

15. The WTRU of any one of claims 9-14, wherein the information related to the first COT includes information indicating a duration of the first COT, and the duration is an integer number of slots or orthogonal frequency division multiple access, OFDM, symbols.

## Patentansprüche

1. Verfahren, das durch eine Drahtlos-Sende- und -Empfangseinheit (Wireless Transmit/Receive Unit, WTRU) implementiert wird, die dafür konfiguriert ist, mehrere Downlink (DL)-Bandbreitenteile (Bandwidth Parts, BWPs), einschließlich eines anfänglichen/standardmäßig voreingestellten DL-BWP, zu managen, wobei das Verfahren umfasst:
Empfangen von Informationen in Bezug auf eine erste Kanalbelegungszeit (Channel Occupancy Time, COT);
Auswählen eines oder mehrerer aktiver DL-BWPs für die WTRU aus den mehreren DL-BWPs für die erste COT auf der Grundlage der empfangenen Informationen;
Empfangen von Informationen, die einen Inaktivitäts-Timer angeben, der für den einen oder die mehreren aktiven DL-BWPs gilt;
Starten des Inaktivitäts-Timers, wenn die erste COT beginnt;
Empfangen erster Downlink-Steuerungsinformationen (Downlink Control Information, DCI) auf dem einen oder den mehreren aktiven DL-BWPs während der ersten COT;
Pausieren des Inaktivitäts-Timers, wenn die erste COT endet;
Starten des Inaktivitäts-Timers, wenn eine zweite COT beginnt;
Deaktivieren des einen oder der mehreren aktiven DL-BWP und Aktivieren des standardmäßig voreingestellten BWP auf der Grundlage, dass der Inaktivitäts-Timer während der zweiten COT abläuft; und
nach dem Aktivieren des standardmäßig voreingestellten BWP, Empfangen zweiter DCI auf dem standardmäßig voreingestellten BWP während einer dritten COT,
wobei die zweite COT später ist als die erste COT und die dritte COT später ist als die zweite COT.

2. Verfahren, das durch eine Drahtlos-Sende- und -Empfangseinheit (Wireless Transmit/Receive Unit, WTRU) implementiert wird, die dafür konfiguriert ist, mehrere Downlink (DL)-Bandbreitenteile (Bandwidth Parts, BWPs), einschließlich eines anfänglichen/standardmäßig voreingestellten DL-BWP, zu managen, wobei das Verfahren umfasst:
Empfangen von Informationen in Bezug auf eine erste Kanalbelegungszeit (Channel Occupancy Time, COT);
Auswählen eines oder mehrerer aktiver DL-BWPs für die WTRU aus den mehreren DL-BWPs für die erste COT auf der Grundlage der empfangenen Informationen;
Empfangen von Informationen, die einen Inaktivitäts-Timer angeben, der für den einen oder die mehreren aktiven DL-BWPs gilt;
Starten des Inaktivitäts-Timers, wenn die erste COT beginnt;
Empfangen erster Downlink-Steuerungsinformationen (Downlink Control Information, DCI) auf dem einen oder den mehreren aktiven DL-BWPs während der ersten COT;
Pausieren des Inaktivitäts-Timers, wenn die erste COT endet;
Starten des Inaktivitäts-Timers, wenn eine zweite COT beginnt;
Empfangen zweiter DCI auf einem DL-BWP unter dem einen oder den mehreren aktiven DL-BWPs während der zweiten COT auf der Grundlage, dass der Inaktivitäts-Timer während der zweiten COT nicht abgelaufen ist,
wobei die zweite COT später ist als die erste COT.

3. Verfahren nach einem der Ansprüche 1 und 2, das des Weiteren umfasst:
Empfangen von Informationen in Bezug auf die zweite COT vor dem Empfangen der zweiten DCI.

4. Verfahren nach Anspruch 3, wobei die Informationen in Bezug auf die erste COT und/oder die Informationen in Bezug auf die zweite COT und/oder, falls Anspruch 3 von Anspruch 1 abhängig ist, Informationen in Bezug auf die dritte COT in mindestens einem von Folgendem empfangen werden: einer COT-Präambel, einem Systeminformationsblock (SIB), einem Master-Informationsblock (MIB), und DCI.

5. Verfahren nach einem der Ansprüche 1-4, wobei der eine oder die mehreren aktiven DL-BWPs mit einem oder mehreren Steuerungsressourcensätzen (Control Resource Sets, CORESETs) verknüpft sind und die ersten DCI unter Verwendung des einen oder der mehreren CORESETs empfangen werden.

6. Verfahren nach einem der Ansprüche 1-5, wobei der eine oder die mehreren aktiven DL-BWPs mit einem Satz Physische-Ressourcen-Blöcke (Physical Resource Blocks, PRBs) und/oder einem Satz von "Erst hören, dann sprechen" (Listen Before Talk, LBT)-Subbändern verknüpft sind.

7. Verfahren nach einem der Ansprüche 1-6, das des Weiteren umfasst:
wobei die Informationen in Bezug auf die erste COT Informationen enthalten, die eine Dauer der ersten COT angeben.

8. Verfahren nach einem der Ansprüche 1-7, wobei die Dauer der ersten COT eine ganzzahlige Anzahl von Schlitzen oder Orthogonal Frequency Division Multiple Access (OFDM)-Symbolen ist.

9. Drahtlos-Sende- und -Empfangseinheit (Wireless Transmit/Receive Unit, WTRU), die dafür konfiguriert ist, mehrere Downlink (DL)-Bandbreitenteile (Bandwidth Parts, BWPs), einschließlich eines anfänglichen/standardmäßig voreingestellten DL-BWP, zu managen, wobei die WTRU umfasst:
einen Prozessor und einen Sender-Empfänger, wobei die WTRU konfiguriert ist zum:
Empfangen von Informationen in Bezug auf eine erste Kanalbelegungszeit (Channel Occupancy Time, COT);
Auswählen eines oder mehrerer aktiver DL-BWPs für die WTRU aus den mehreren DL-BWPs für die erste COT auf der Grundlage der empfangenen Informationen;
Empfangen von Informationen, die einen Inaktivitäts-Timer angeben, der für den einen oder die mehreren aktiven DL-BWPs gilt;
Starten des Inaktivitäts-Timers, wenn die erste COT beginnt;
Empfangen erster Downlink-Steuerungsinformationen (Downlink Control Information, DCI) auf dem einen oder den mehreren aktiven DL-BWPs während der ersten COT;
Pausieren des Inaktivitäts-Timers, wenn die erste COT endet;
Starten des Inaktivitäts-Timers, wenn eine zweite COT beginnt;
Deaktivieren des einen oder der mehreren aktiven DL-BWP und Aktivieren des standardmäßig voreingestellten BWP auf der Grundlage, dass der Inaktivitäts-Timer während der zweiten COT abläuft; und
nach dem Aktivieren des standardmäßig voreingestellten BWP, Empfangen zweiter DCI auf dem standardmäßig voreingestellten BWP während einer dritten COT,
wobei die zweite COT später ist als die erste COT und die dritte COT später ist als die zweite COT.

10. Drahtlos-Sende- und -Empfangseinheit (Wireless Transmit/Receive Unit, WTRU), die dafür konfiguriert ist, mehrere Downlink (DL)-Bandbreitenteile (Bandwidth Parts, BWPs), einschließlich eines anfänglichen/standardmäßig voreingestellten DL-BWP, zu managen, wobei die WTRU umfasst:
einen Prozessor und einen Sender-Empfänger, wobei die WTRU konfiguriert ist zum:
Empfangen von Informationen in Bezug auf eine erste Kanalbelegungszeit (Channel Occupancy Time, COT);
Auswählen eines oder mehrerer aktiver DL-BWPs für die WTRU aus den mehreren DL-BWPs für die erste COT auf der Grundlage der empfangenen Informationen;
Empfangen von Informationen, die einen Inaktivitäts-Timer angeben, der für den einen oder die mehreren aktiven DL-BWPs gilt;
Starten des Inaktivitäts-Timers, wenn die erste COT beginnt;
Empfangen erster Downlink-Steuerungsinformationen (Downlink Control Information, DCI) auf dem einen oder den mehreren aktiven DL-BWPs während der ersten COT;
Pausieren des Inaktivitäts-Timers, wenn die erste COT endet;
Starten des Inaktivitäts-Timers, wenn eine zweite COT beginnt;
Empfangen zweiter DCI auf einem DL-BWP unter dem einen oder den mehreren aktiven DL-BWPs während der zweiten COT auf der Grundlage, dass der Inaktivitäts-Timer während der zweiten COT nicht abgelaufen ist, wobei die zweite COT später ist als die erste COT.

11. WTRU nach einem der Ansprüche 9 und 10, wobei die WTRU des Weiteren dafür konfiguriert ist, vor dem Empfangen der zweiten DCI Informationen in Bezug auf die zweite COT zu empfangen.

12. WTRU nach Anspruch 11, wobei die WTRU des Weiteren dafür konfiguriert ist, die Informationen in Bezug auf die erste COT und/oder die Informationen in Bezug auf die zweite COT und/oder, falls Anspruch 11 von Anspruch 9 abhängig ist, Informationen in Bezug auf die dritte COT in mindestens einem von Folgendem zu empfangen: einer COT-Präambel, einem Systeminformationsblock (SIB), einem Master-Informationsblock (MIB), und DCI.

13. WTRU nach einem der Ansprüche 9-12, wobei der eine oder die mehreren aktiven DL-BWPs mit einem oder mehreren Steuerungsressourcensätzen (Control Resource Sets, CORESETs) verknüpft sind, und wobei die WTRU des Weiteren dafür konfiguriert ist, die ersten DCI unter Verwendung des einen oder der mehreren CORESETs zu empfangen.

14. WTRU nach einem der Ansprüche 9-13, wobei der eine oder die mehreren DL-BWPs mit einem Satz Physische-Ressourcen-Blöcke (Physical Resource Blocks, PRBs) und/oder einem Satz von "Erst hören, dann sprechen" (Listen Before Talk, LBT)-Subbändern verknüpft sind.

15. WTRU nach einem der Ansprüche 9-14, wobei die Informationen in Bezug auf die ersten COT Informationen enthalten, die eine Dauer der ersten COT angeben, und die Dauer eine ganzzahlige Anzahl von Schlitzen oder Orthogonal Frequency Division Multiple Access (OFDM)-Symbolen ist.

## Revendications

1. Procédé, mis en oeuvre par une unité émettrice-réceptrice sans fil, WTRU, configurée pour gérer une pluralité de parties de bande passante, BWP, de liaison descendante, DL, comprenant une DL BWP initiale/par défaut, le procédé comprenant :
la réception d'informations relatives à un premier temps d'occupation de canal, COT ;
la sélection d'une ou plusieurs DL BWP actives pour la WTRU parmi la pluralité de DL BWP pour le premier COT sur la base des informations reçues ;
la réception d'informations indiquant une temporisation d'inactivité applicable aux une ou plusieurs DL BWP actives ;
le démarrage de la temporisation d'inactivité au début du premier COT;
la réception de premières informations de commande de liaison descendante, DCI, sur les une ou plusieurs DL BWP actives pendant le premier COT ;
la mise en pause de la temporisation d'inactivité à la fin du premier COT;
le démarrage de la temporisation d'inactivité au début d'un deuxième COT;
la désactivation des une ou plusieurs DL BWP actives et l'activation de la BWP par défaut sur la base de l'expiration de la temporisation d'inactivité pendant le deuxième COT ; et
après l'activation de la BWP par défaut, la réception de deuxièmes DCI sur la BWP par défaut pendant un troisième COT,
dans lequel le deuxième COT est ultérieur au premier COT, et le troisième COT est ultérieur au deuxième COT.

2. Procédé, mis en oeuvre par une unité émettrice-réceptrice sans fil, WTRU, configurée pour gérer une pluralité de parties de bande passante, BWP, de liaison descendante, DL, comprenant une DL BWP initiale/par défaut, le procédé comprenant :
la réception d'informations relatives à un premier temps d'occupation de canal, COT ;
la sélection d'une ou plusieurs DL BWP actives pour la WTRU parmi la pluralité de DL BWP pour le premier COT sur la base des informations reçues ;
la sélection d'informations indiquant une temporisation d'inactivité applicable aux une ou plusieurs DL BWP actives ;
le démarrage de la temporisation d'inactivité au début du premier COT;
la réception de premières informations de commande de liaison descendante, DCI, sur les une ou plusieurs DL BWP actives pendant le premier COT ;
la mise en pause de la temporisation d'inactivité à la fin du premier COT;
le démarrage de la temporisation d'inactivité au début d'un deuxième COT;
la réception de deuxièmes DCI sur une DL BWP parmi les une ou plusieurs DL BWP actives pendant le deuxième COT sur la base de la nonexpiration de la temporisation d'inactivité pendant le deuxième COT,
dans lequel le deuxième COT est ultérieur au premier COT.

3. Procédé selon la revendication 1 ou 2, comprenant en outre :
la réception d'informations relatives au deuxième COT avant la réception des deuxièmes DCI.

4. Procédé selon la revendication 3, dans lequel les informations relatives au premier COT, et/ou les informations relatives au deuxième COT, et/ou, dans le cas où la revendication 3 dépend de la revendication 1, les informations relatives au troisième COT sont reçues dans au moins l'un parmi : un préambule de COT, un bloc d'informations système, SIB, un bloc d'informations maître, MIB, et des DCI.

5. Procédé selon l'une quelconque des revendications 1 à 4, dans lequel les une ou plusieurs DL BWP actives sont associées à un ou plusieurs ensembles de ressources de commande, CORESET, et les premières DCI sont reçues à l'aide des un ou plusieurs CORESET.

6. Procédé selon l'une quelconque des revendications 1 à 5, dans lequel les une ou plusieurs DL BWP actives sont associées à un ensemble de blocs de ressources physiques, PRB, et/ou à un ensemble de sous-bandes écouter avant de parler, LBT.

7. Procédé selon l'une quelconque des revendications 1 à 6, comprenant en outre :
dans lequel les informations relatives au premier COT comprennent des informations indiquant une durée du premier COT.

8. Procédé selon l'une quelconque des revendications 1 à 7, dans lequel la durée du premier COT est un nombre entier de créneaux ou de symboles d'accès multiples par répartition de fréquence orthogonale, OFDM.

9. Unité émettrice-réceptrice sans fil, WTRU, configurée pour gérer une pluralité de parties de bande passante, BWP, de liaison descendante, DL, comprenant une DL BWP initiale/par défaut, la WTRU comprenant :
un processeur et un émetteur-récepteur, dans laquelle la WTRU est configurée pour :
recevoir des informations relatives à un premier temps d'occupation de canal, COT ;
sélectionner une ou plusieurs DL BWP actives pour la WTRU parmi la pluralité de DL BWP pour le premier COT sur la base des informations reçues ;
recevoir des informations indiquant une temporisation d'inactivité applicable aux une ou plusieurs DL BWP actives ;
démarrer la temporisation d'inactivité au début du premier COT ;
recevoir des premières informations de commande de liaison descendante, DCI, sur les une ou plusieurs DL BWP actives pendant le premier COT ;
mettre en pause la temporisation d'inactivité à la fin du premier COT;
démarrer la temporisation d'inactivité au début d'un deuxième COT;
désactiver les une ou plusieurs DL BWP actives et activer la BWP par défaut sur la base de l'expiration de la temporisation d'inactivité pendant le deuxième COT ; et
après l'activation de la BWP par défaut, recevoir des deuxièmes DCI sur la BWP par défaut pendant un troisième COT,
dans lequel le deuxième COT est ultérieur au premier COT, et le troisième COT est ultérieur au deuxième COT.

10. Unité émettrice-réceptrice sans fil, WTRU, configurée pour gérer une pluralité de parties de bande passante, BWP, de liaison descendante, DL, comprenant une DL BWP initiale/par défaut, la WTRU comprenant :
un processeur et un émetteur-récepteur, dans laquelle la WTRU est configurée pour :
recevoir des informations relatives à un premier temps d'occupation de canal, COT ;
sélectionner une ou plusieurs DL BWP actives pour la WTRU parmi la pluralité de DL BWP pour le premier COT sur la base des informations reçues ;
recevoir des informations indiquant une temporisation d'inactivité applicable aux une ou plusieurs DL BWP actives ;
démarrer la temporisation d'inactivité au début du premier COT ;
recevoir des premières informations de commande de liaison descendante, DCI, sur les une ou plusieurs DL BWP actives pendant le premier COT ;
mettre en pause la temporisation d'inactivité à la fin du premier COT;
démarrer la temporisation d'inactivité au début d'un deuxième COT;
recevoir des deuxièmes DCI sur une DL BWP parmi les une ou plusieurs DL BWP actives pendant le deuxième COT sur la base de la nonexpiration de la temporisation d'inactivité pendant le deuxième COT,
dans laquelle le deuxième COT est ultérieur au premier COT.

11. WTRU selon la revendication 9 ou 10, dans laquelle la WTRU est en outre configurée pour recevoir des informations relatives au deuxième COT avant la réception des deuxièmes DCI.

12. WTRU selon la revendication 11, dans laquelle la WTRU est en outre configurée pour recevoir les informations relatives au premier COT, et/ou les informations relatives au deuxième COT, et/ou, dans le cas où la revendication 11 dépend de la revendication 9, les informations relatives au troisième COT, dans au moins l'un parmi : un préambule de COT, un bloc d'informations système, SIB, un bloc d'informations maître, MIB, et des DCI.

13. WTRU selon l'une quelconque des revendications 9 à 12, dans laquelle les une ou plusieurs DL BWP actives sont associées à un ou plusieurs ensembles de ressources de commande, CORESET, et dans laquelle la WTRU est en outre configurée pour recevoir les premières DCI à l'aide des un ou plusieurs CORESET.

14. WTRU selon l'une quelconque des revendications 9 à 13, dans laquelle les une ou plusieurs DL BWP sont associées à un ensemble de blocs de ressources physiques, PRB, et/ou à un ensemble de sous-bandes écouter avant de parler, LBT.

15. WTRU selon l'une quelconque des revendications 9 à 14, dans laquelle les informations relatives au premier COT comprennent des informations indiquant une durée du premier COT, et la durée est un nombre entier de créneaux ou de symboles d'accès multiples par répartition de fréquence orthogonale, OFDM.
